# EUROPEAN PATENT APPLICATION

(11) **EP 3 763 471 A1**
(43) Date of publication of application: **13.01.2021**
(21) Application number: 20156312.9
(22) Date of filing: 10.02.2020
(51) Int. Cl.: B23K 26/0622, B23K 26/382, B23K 26/40, B23K 26/06, B23K 26/402, B23K 26/082, B23K 101/00, B23K 101/18, B23K 103/16, B23K 101/34

(54) **LASER PROCESSING METHOD**

(30) Priority: 08.07.2019 JP 2019127138
(71) Applicant: Mitsubishi Heavy Industries, Ltd., Chiyoda-ku Tokyo 100-8332 (JP)
(72) Inventor: GOYA, Saneyuki, Tokyo, 100-8332 (JP); DANNO, Minoru, Tokyo, 100-8332 (JP); GYOBU, Satoshi, Tokyo, 100-8332 (JP)
(74) Representative: Henkel & Partner mbB

(57) **Abstract**

A laser processing method includes a step (S1) of irradiating a workpiece, in which a metal layer made of a heat-resistant alloy and a protective layer made of a thermal barrier coating are laminated, with a first laser beam that is a short-pulse laser beam, and forming a through-hole penetrating the metal layer, and a step (S2) of irradiating the workpiece with a laser beam to expand the through-hole.

## Description

### BACKGROUND OF THE INVENTION

### Field of the Invention

The present invention relates to a laser processing method.

Priority is claimed on Japanese Patent Application No. 2019-127138, filed July 8, 2019, the content of which is incorporated herein by reference.

### Description of Related Art

Heat resistance (heat insulation) is required for parts that are exposed to high temperature atmosphere, such as stator and rotor vanes of gas turbines, stator vanes of aircrafts engines, or panels that constitute combustors of aircraft engines. Thus, there are cases where composite materials including a metal layer consisting of a heat-resistant alloy and a protective layer, which is laminated on the surface of the metal layer and consists of a thermal barrier coating (TBC) which is heat-insulated, are used for such parts.

In order to form fine holes for cooling in the parts formed of such materials, there is a case where laser processing is used. For example, Patent Document 1 discloses a configuration in which a protective layer provided on the surface of a blade is removed by a pulsed ultraviolet laser beam and a metal layer is processed by a YAG laser beam or the like to form a cooling hole.

Additionally, Patent Document 2 discloses a configuration in which, after a larger-diameter pit is formed in a protective layer of an object to be processed, an auxiliary through-hole with a smaller diameter is formed in a metal layer, and the desired through-hole is cut in the object in such a manner that the auxiliary through-hole is expanded. In such a configuration, in the step of processing the auxiliary through-hole, a fiber laser beam having a pulse width of sub-milliseconds or more is applied to form the auxiliary through-hole in the metal layer after a short-pulse laser beam having a pulse width of 100 microseconds or less is applied.

### [Patent Documents]

[Patent Document 1] U.S. Patent No. 5216808
[Patent Document 2] Japanese Examined Patent Application, First Publication No. 2017-225994

### SUMMARY OF THE INVENTION

However, in the configuration disclosed in Patent Document 1, in a case where a hole is formed by irradiating a composite material from the protective layer side with a laser beam, when the metal layer is irradiated with the laser beam, metal molten in liquid form rebounds to the surface of the protective layer in a stage before the hole is formed in the metal layer. Also in the configuration disclosed in Patent Document 2, if the metal layer is irradiated with a fiber laser beam when the auxiliary through-hole is formed in the metal layer after the larger-diameter part is formed in the protective layer, the molten metal rebounds to the surface of the protective layer in the stage before the auxiliary through-hole is formed.

The molten metal (dross), which has rebounded in this way, adheres to an inner peripheral surface of a processing hole that is being formed in the protective layer and the metal layer.

For this reason, separation between the protective layer and the metal layer may occur at a boundary between the protective layer and the metal layer due to the heat of the molten metal adhering to the inner peripheral surface of the hole.

The present disclosure has been made in order to solve any of the above problems, and an object thereof is to provide a laser processing method capable of suppressing the separation between a protective layer and a metal layer.

A laser processing method of a first aspect includes a step of irradiating a workpiece, in which a metal layer made of a heat-resistant alloy and a protective layer made of a thermal barrier coating are laminated, with a first laser beam that is a short-pulse laser beam, and forming a through-hole penetrating the metal layer, and a step of irradiating the workpiece with a laser to expand a through-hole.

According to the present aspect, the short-pulse laser beam is used for the first laser beam. The short-pulse laser beam has a shorter pulse width than a fiber laser beam or the like and has a small influence of heat during the irradiation with the laser beam. By forming the through-hole at least in the metal layer with the first laser beam that is such a short-pulse laser beam, molten metal generated when the through-hole is formed can be prevented from rebounding to the protective layer side. Additionally, by forming the through-hole, the molten metal generated when the laser beam is applied to expand the through-hole is discharged to a side opposite to the protective layer through the through-hole. Accordingly, also in the step of expanding the through-hole, the molten metal can be prevented from rebounding to the protective layer side.

Hence, the laser processing method can suppress the separation between the protective layer and the metal layer.

Additionally, a laser processing method of a second aspect is the laser processing method of the first aspect in which, in the step of forming the through-hole, the workpiece is irradiated with the first laser beam is to form the through-hole penetrating the protective layer and the metal layer.

According to the present aspect, the through-hole penetrating the protective layer and the metal layer can be efficiently formed by the first laser beam. Additionally, by processing the protective layer, which is easily affected by heat, with the first laser beam that is the short-pulse laser beam, the influence of heat on the protective layer can be suppressed, and the processing can be performed with excellent quality.

Additionally, a laser processing method of a third aspect is the laser processing method of the first or second aspect in which the step of expanding the through-hole includes a step of irradiating the protective layer with the first laser beam as the laser beam to expand the through-hole in the protective layer, and a step of irradiating the metal layer with the first laser beam as the laser beam to expand the through-hole in the metal layer.

According to the present aspect, by expanding the through-hole in the protective layer with the first laser beam, the influence of heat on the protective layer can be suppressed, and the processing can be performed with excellent quality. Additionally, also regarding the metal layer, by expanding the through-hole with the first laser beam, the molten metal can be prevented from rebounding to the protective layer side.

Additionally, a laser processing method of a fourth aspect is the laser processing method of the third aspect in which the step of expanding the through-hole in the metal layer makes an output of the first laser beam higher than that in the step of expanding the through-hole in the protective layer.

According to the present aspect, in the step of expanding the through-hole in the protective layer, by making the output of the first laser beam low, the influence of heat on the protective layer can be suppressed, and the processing can be performed with excellent quality. In contrast, in the step of expanding the through-hole in the metal layer, the processing can be efficiently performed in a short time by increasing the output of the first laser beam.

Additionally, a laser processing method of a fifth aspect is the laser processing method of the first aspect, further including a step of irradiating the protective layer with the first laser beam to form a wide hole having a larger internal diameter than the through-hole in the protective layer before the step of forming the through-hole, and, in the step of forming the through-hole, an inside of the wide hole is irradiated with the first laser beam to form the through-hole penetrating the metal layer.

According to the present aspect, by forming the wide hole in the protective layer with the first laser beam that is the short-pulse laser beam, the influence of heat on the protective layer can be suppressed, and the processing can be performed with excellent quality. Additionally, the processing to the protective layer can be performed only once. Thus, in a case where processing conditions are changed in the protective layer and the metal layer, condition changes are also performed only once, and the efficiency is enhanced.

Additionally, a laser processing method of a sixth aspect is the laser processing method of the fifth aspect in which, in the step of expanding the through-hole, the inside of the wide hole is irradiated with the first laser beam, or a second laser beam having a wider pulse width than the first laser beam during a laser output as the laser beam to expand the through-hole in the metal layer.

According to the present aspect, by expanding the through-hole in the metal layer with the first laser beam after the wide hole is formed in the protective layer, the molten metal can be prevented from rebounding to the protective layer side. Additionally, if the through-hole is expanded in the metal layer with the second laser beam after the wide hole is formed in the protective layer, the processing of expanding the through-hole can be completed in a short time.

Additionally, a laser processing method of a seventh aspect is the laser processing method of any of the first to sixth aspects in which a pulse width of the first laser beam during the laser output is 1 nanosecond or more and 1 microsecond or less.

According to the present aspect, the influence of heat on the protective layer and the rebound of the molten metal from the metal layer side to the protective layer side can be effectively suppressed.

Additionally, a laser processing method of an eighth aspect is the laser processing method of any of the first to seventh aspects in which the first laser beam is applied while being turned around a central axis of the through-hole in a state where a surface of the metal layer in contact with the protective layer is exposed.

According to the present aspect, if the first laser beam is applied while being turned in a state where the surface of the metal layer is exposed, fine particles are scattered from the surface of the metal layer and adhere to an inner peripheral surface of the protective layer, and a metal film is formed. Accordingly, the inner peripheral surface of the protective layer is protected.

According to the aspects of the present invention, the separation between the protective layer and the metal layer can be suppressed.

### BRIEF DESCRIPTION OF THE DRAWINGS

FIG. 1 is a block diagram showing a functional configuration of a laser processing system for forming a hole in a workpiece by a laser processing method according to a first embodiment.
FIG. 2 is a view showing a hardware configuration of a control device in a laser processing system used in a laser processing method according to the first embodiment.
FIG. 3 is a functional block diagram of the control device in the laser processing system used in the laser processing method according to the first embodiment.
FIG. 4 is a sectional view showing an example of the workpiece in which a hole is formed by the laser processing method according to the first embodiment.
FIG. 5 is a flowchart showing a flow of the laser processing method according to the first embodiment.
FIG. 6 is a sectional view showing a state where a through-hole is being formed by irradiating a protective layer with a first laser beam in the laser processing method according to the first embodiment.
FIG. 7 is a sectional view showing a state where the through-hole is being formed by irradiating a metal layer with a first laser beam in the laser processing method according to the first embodiment.
FIG. 8 is a sectional view showing a state where the through-hole penetrating the protective layer and the metal layer is formed in the laser processing method according to the first embodiment.
FIG. 9 is a sectional view showing a state where a diameter-increased hole is expanded in the protective layer in the laser processing method according to the first embodiment.
FIG. 10 is a sectional view showing a state where the diameter-increased hole is being expanded in the metal layer in the laser processing method according to the first embodiment.
FIG. 11 is a sectional view showing a state where a fine hole penetrating the protective layer and the metal layer is formed in the laser processing method according to the first embodiment.
FIG. 12 is a sectional view showing a state where the first laser beam is applied while being turned in a state where a surface of the metal layer is exposed in a laser processing method according to a modification example of the first embodiment.
FIG. 13 is a block diagram showing a functional configuration of a laser processing system for forming a hole in a workpiece by a laser processing method according to a second embodiment.
FIG. 14 is a sectional view showing an example of the workpiece in which the hole is formed by the laser processing method according to the second embodiment.
FIG. 15 is a flowchart showing a flow of the laser processing method according to the second embodiment.
FIG. 16 is a sectional view showing a state where a wide hole is formed by irradiating a protective layer with a first laser beam in the laser processing method according to the second embodiment.
FIG. 17 is a sectional view showing a state where a through-hole penetrating a metal layer is formed by irradiating the metal layer with the first laser beam in the laser processing method according to the second embodiment.
FIG. 18 is a sectional view showing a state where a fine hole penetrating the protective layer and the metal layer is formed in the laser processing method according to the second embodiment.
FIG. 19 is a sectional view showing a state where the first laser beam is applied while being turned in a state where a surface of the metal layer is exposed in a laser processing method according to a modification example of the second embodiment.

### DETAILED DESCRIPTION OF THE INVENTION

Hereinafter, various embodiments related to the present invention will be described with reference to the drawings.

### <First embodiment>

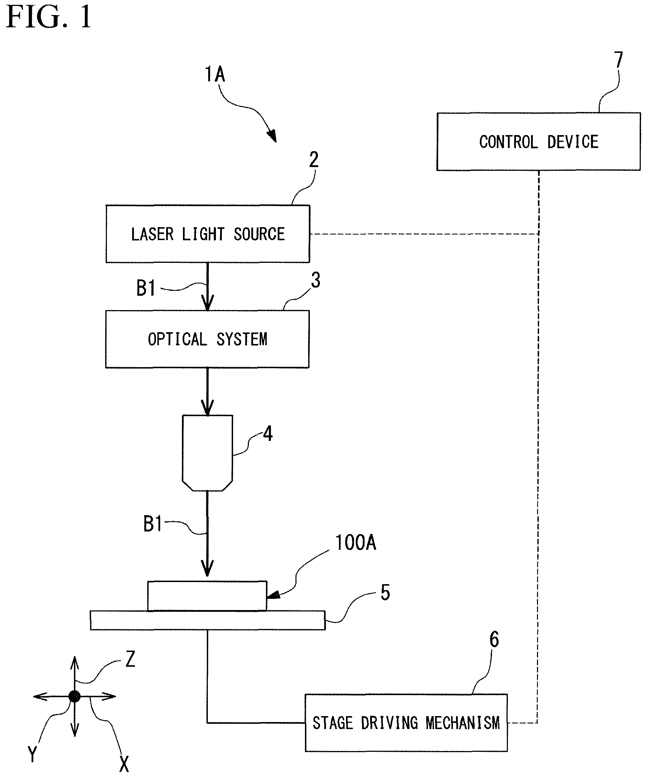

Hereinafter, a laser processing method according to a first embodiment of the present invention will be described with reference to FIGS. 1 to 11.

FIG. 1 is a block diagram showing a functional configuration of a laser processing system for forming a hole in a workpiece by the laser processing method according to the first embodiment.

As shown in FIG. 1, a laser processing system 1A used in the laser processing method in the present embodiment includes a laser light source 2, an optical system 3, a nozzle 4, a stage 5, a stage driving mechanism 6, and a control device 7.

The laser light source 2 oscillates a first laser beam B1.

The first laser beam B1 is a short-pulse laser beam.

Here, the "short-pulse laser beam" means a laser beam which has a pulse width of 100 microseconds or less.

In the present embodiment, the laser light source 2 oscillates the first laser beam B1 having a pulse width of 100 femtoseconds or more and 10 microseconds or less as the short-pulse laser beam.

The more preferable pulse width of the first laser beam B1 is 0.1 nanoseconds or more and 1 microsecond or less.

The even more preferable pulse width of the first laser beam B1 is 1 nanosecond or more and 1 microsecond or less.

Additionally, the pulse frequency of the first laser beam B1 oscillated by the laser light source 2 is, for example, 10 kHz to 1000 kHz.

The optical system 3 guides the first laser beam B1 oscillated by the laser light source 2 to the nozzle 4. The optical system 3 includes a condensing optical system (not shown) for condensing the first laser beam B1 at a predetermined irradiation position on a workpiece 100A, a scanning mechanism for performing scanning with the first laser beam B1, an irradiation angle changing mechanism (not shown) that changes the irradiation angle of the first laser beam B1, and the like. As such an optical system 3, for example, an optical system using a prism, a Galvano scanner, or the like can be used. In addition, the specific configuration of the optical system 3 is not limited at all as long as the required functions can be performed.

The nozzle 4 irradiates the workpiece 100A with the first laser beam B1 guided by the optical system 3.

The stage 5 is disposed to face the nozzle 4. The stage 5 supports the workpiece 100A.

The stage driving mechanism 6 moves the stage 5 that supports the workpiece 100A within a plane orthogonal to an irradiation axis direction of the first laser beam B1 applied from the nozzle 4. The stage driving mechanism 6 includes two sets of guides (not shown) that extend in two directions (X-Y directions) orthogonal to each other within the plane orthogonal to the irradiation axis direction, a drive unit that moves the stage 5 along each guide (not shown), and the like. Additionally, the stage driving mechanism 6 may move the stage 5 in the irradiation axis direction (Z direction) of the first laser beam B1.

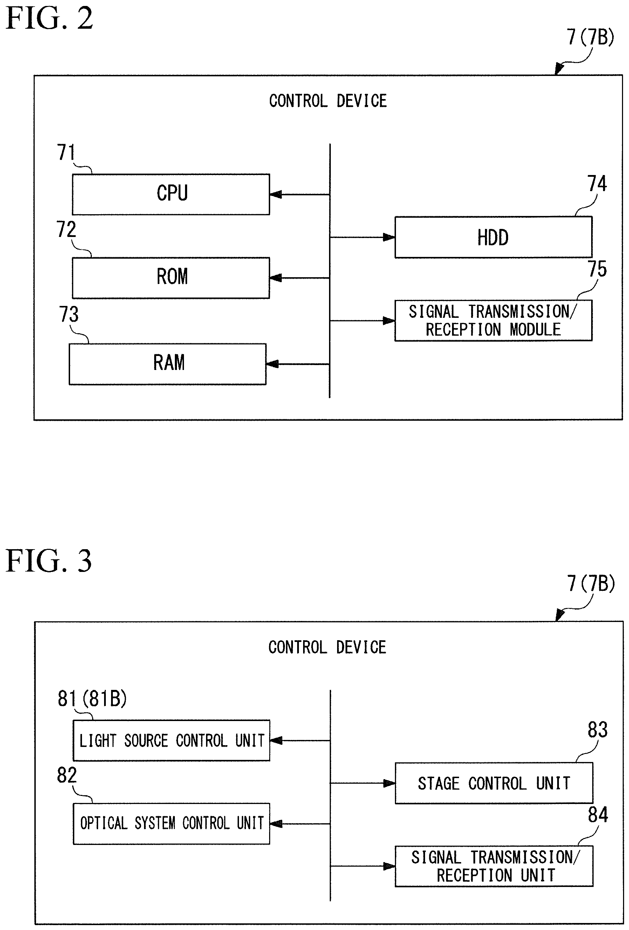

FIG. 2 is a view showing a hardware configuration of the control device in the laser processing system used in the laser processing method according to the first embodiment.

As shown in FIG. 2, the control device 7 controls the oscillation of the first laser beam B1 in the laser light source 2, the operation of the optical system 3, the operation of the stage driving mechanism 6, and the like. The control device 7 is a computer including a central processing unit (CPU) 71, a read only memory (ROM) 72, a random access memory (RAM) 73, a hard disk drive (HDD) 74, a signal transmission/reception module 75 and the like. The signal transmission/reception module 75 transmits and receives signals for control between the laser light source 2, the optical system 3, and the stage driving mechanism 6.

FIG. 3 is a functional block diagram of the control device in the laser processing system used in the laser processing method according to the first embodiment.

As shown in FIG. 3, the CPU 71 of the control device 7 includes respective components of a light source control unit 81, an optical system control unit 82, a stage control unit 83, and a signal transmission/reception unit 84 by executing a program stored in advance in its own device.

The light source control unit 81 controls the oscillation of the first laser beam B1 in the laser light source 2. The optical system control unit 82 controls the operation of respective parts of the optical system 3. The stage control unit 83 controls the operation of the stage 5 by the stage driving mechanism 6. The signal transmission/reception unit 84 is the signal transmission/reception module 75 in terms of hardware and transmits and receives the signals for control between the laser light source 2, the optical system 3, and the stage driving mechanism 6.

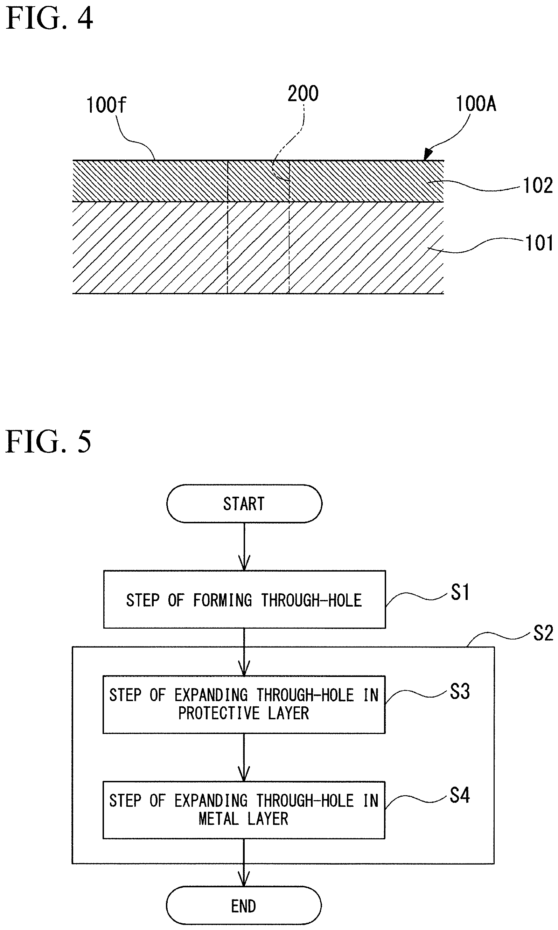

FIG. 4 is a sectional view showing an example of the workpiece in which a hole is formed by the laser processing method according to the first embodiment.

As shown in FIG. 4, the workpiece 100A laser-processed by the above laser processing system 1A is formed of a laminate in which a metal layer 101 and a protective layer 102 are laminated. The workpiece 100A is, for example, parts that are exposed to high temperature atmosphere, such as stator and rotor vanes of gas turbines, stator vanes of aircrafts engines, or panels that constitute combustors of aircraft engines. In the present embodiment, the workpiece 100A is, for example, a thin plate of which the thickness is several millimeters or less.

The metal layer 101 is made of, for example, a heat-resistant alloy, such as a nickel (Ni) -based alloy. In addition to this, the metal layer 101 may be made of a titanium alloy, Hastelloy, Tomiloy, stainless steel, heat-resistant steel, titanium, tungsten, or the like.

The protective layer 102 is formed so as to cover one surface of the metal layer 101. The protective layer 102 is formed of a thermal barrier coating (TBC), for example, is formed of yttria-stabilized zirconia). The thickness of the protective layer 102 is, for example, about 0.1 to 2 mm. The thickness of the protective layer is determined from a required heat resistance.

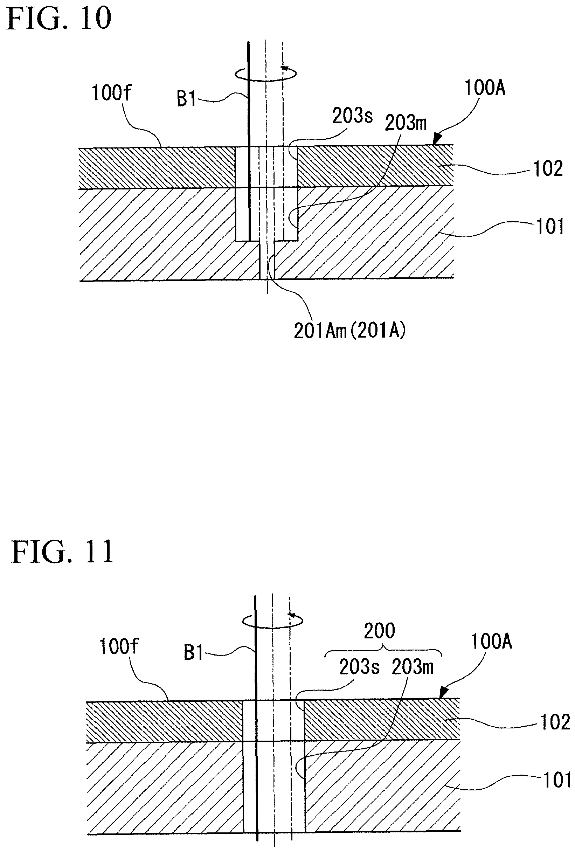

In the laser processing method of the present embodiment, a fine hole 200 (refer to FIG. 11) having an internal diameter of, for example, 0.5 mm or less is formed in the metal layer 101 and the protective layer 102 of such a workpiece 100A. In the present embodiment, for example, the fine hole 200, which extends in a direction orthogonal to of a workpiece surface 100f, is formed in the workpiece 100A.

Next, the laser processing method related to the present embodiment will be described.

FIG. 5 is a flowchart showing a flow of the laser processing method according to the first embodiment.

As shown in FIG. 5, the laser processing method according to the present embodiment includes a step S1 of forming a through-hole 201A, and a step S2 of expanding the through-hole 201A. The operation of the laser processing system 1A in the following respective steps is performed as the CPU 71 of the above control device 7 executes the program to control the operation of respective units of the light source control unit 81, the optical system control unit 82, the stage control unit 83, and the signal transmission/reception unit 84.

In Step S1 of forming the through-hole 201A, the first laser beam B1, which is the short-pulse laser beam, is applied to form the through-hole 201A penetrating the metal layer 101 in the workpiece 100A.

For example, in Step S1 of forming the through-hole 201A, the first laser beam B1, which is the short-pulse laser beam, may be applied to form the through-hole 201A penetrating the protective layer 102 and the metal layer 101 in the workpiece 100A.

In order to form the through-hole 201A, the workpiece 100A on the stage 5 (refer to FIG. 1) is irradiated from the nozzle 4 with the first laser beam B1 oscillated by the laser light source 2 and passing through the optical system 3. The internal diameter of the through-hole 201A formed in the present embodiment is, for example, about 0.2 mm.

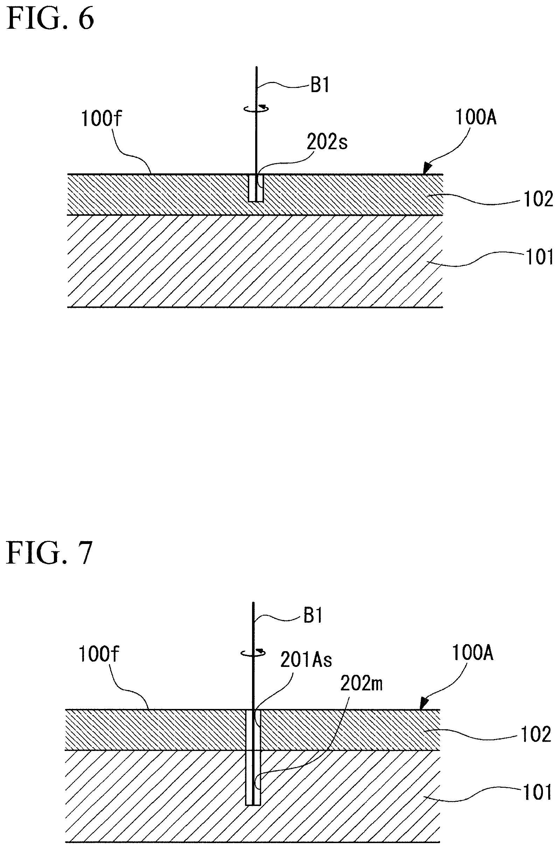

FIG. 6 is a sectional view showing a state where the through-hole is being formed by irradiating the protective layer with the first laser beam in the laser processing method according to the first embodiment.

As shown in FIG. 6, the workpiece surface 100f on the protective layer 102 side of the workpiece 100A is irradiated with the first laser beam B1. The workpiece may be scanned by the optical system 3 such that the first laser beam B1 turns around the irradiation axis. By the irradiation with the first laser beam B1, first, a processing hole 202s is formed in the protective layer 102. In this case, since the first laser beam B1 is the short-pulse laser beam having a shorter pulse width than a fiber laser beam or the like, the heat during the irradiation with a laser beam is prevented from affecting the processing hole 202s of the protective layer 102.

FIG. 7 is a sectional view showing a state where the through-hole is being formed by irradiating the metal layer with the first laser beam in the laser processing method according to the first embodiment.

As shown in FIG. 7, if the irradiation with the first laser beam B1 is continued, a through-hole 201As penetrating the protective layer 102 is formed. If the irradiation with the first laser beam B1 is further continued, a processing hole 202m is formed in the metal layer 101 continuously below the through-hole 201As. By using the first laser beam B1 that is the short-pulse laser beam, the molten metal generated as the metal layer 101 melts in a non-penetration processing hole 202m is prevented from rebounding to the protective layer 102 side.

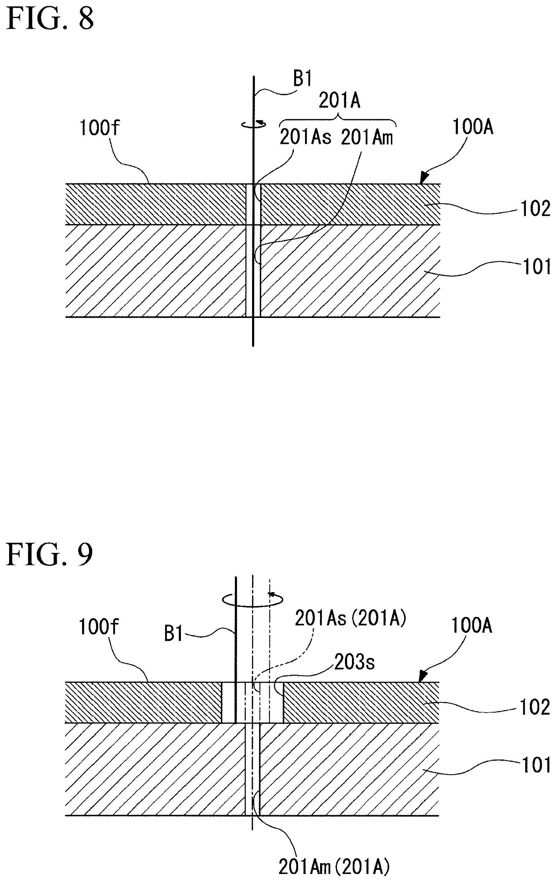

FIG. 8 is a sectional view showing a state where the through-hole penetrating the protective layer and the metal layer is formed in the laser processing method according to the first embodiment.

As shown in FIG. 8, if the irradiation with the first laser beam B1 is further continued, the processing hole 202m penetrates, and a through-hole 201Am is formed in the metal layer 101. Accordingly, the through-hole 201As of the protective layer 102 and the through-hole 201Am of the metal layer 101 communicate with each other, and the through-hole 201A penetrating the protective layer 102 and the metal layer 101 is formed in the workpiece 100A.

After the through-hole 201A is formed, the process proceeds to Step S2 of expanding the through-hole 201A.

In Step S2 of expanding the through-hole 201A, the workpiece 100A is irradiated with the first laser beam (laser beam) B1, the through-hole 201A is expanded, and the fine hole 200 is formed. As shown in FIG. 5, in the present embodiment, Step S2 of expanding the through-hole 201A includes Step S3 of expanding the through-hole 201As in the protective layer 102 and Step S4 of expanding the through-hole 201Am in the metal layer 101.

FIG. 9 is a sectional view showing a state where the through-hole 201As is expanded in the protective layer in the laser processing method according to the first embodiment.

As shown in FIG. 9, in Step S3 of expanding the through-hole 201As in the protective layer 102, the first laser beam (laser beam) B1 is applied to the protective layer 102 to increase the internal diameter of the through-hole 201As formed in the protective layer 102. In Step S3, the workpiece 100A is scanned by the operation of the optical system 3 or the stage driving mechanism 6 such that the first laser beam B1 turns around a central axis of the through-hole 201As. Accordingly, the internal diameter of the through-hole 201As is increased, and a diameter-increased hole 203s is formed in the protective layer 102. By expanding the through-hole 201As in the protective layer 102 by the first laser beam B1 that is the short-pulse laser beam, the influence of heat on the protective layer 102 is suppressed.

If the diameter of the diameter-increased hole 203s is increased to the internal diameter of the fine hole 200 to be formed, Step S3 of expanding the through-hole 201As in the protective layer 102 ends, and the process proceeds to Step S4 of expanding the through-hole 201Am in the metal layer 101.

FIG. 10 is a sectional view showing a state where the through-hole 201Am is being expanded in the metal layer in the laser processing method according to the first embodiment.

As shown in FIG. 10, in Step S4 of expanding the through-hole 201Am in the metal layer 101, the first laser beam B1 is applied to the metal layer 101 exposed into the diameter-increased hole 203s to increase the internal diameter of the through-hole 201Am in the metal layer 101. Even in Step S4, the workpiece 100A is scanned by the operation of the optical system 3 or the stage driving mechanism 6 such that the first laser beam B1 turns around a central axis of the through-hole 201Am. Accordingly, the internal diameter of the through-hole 201Am is increased, and a diameter-increased hole 203m is formed in the metal layer 101.

Here, the molten metal generated when the internal diameter of the through-hole 201Am is increased is discharged to a lower side that is a side opposite to the protective layer 102 through the through-hole 201A. Additionally, in Step S4, the first laser beam B1, which is the short-pulse laser beam having a shorter pulse width than the fiber laser beam or the like, is used. Thus, the molten metal generated when the internal diameter of the through-hole 201Am rebounds is increased is prevented from rebounding to the protective layer 102 side.

Additionally, in Step S4 of expanding the through-hole 201Am in the metal layer 101, the output of the first laser beam B1 with which the metal layer 101 is irradiated is made higher than the output of the first laser beam B1 in Step S3 of expanding the through-hole 201As in the protective layer 102. In this way, by increasing the output of the first laser beam B1 in Step S4 of expanding the through-hole 201Am in the metal layer 101, the formation of the diameter-increased hole 203m can be efficiently performed in a short time.

FIG. 11 is a sectional view showing a state where the fine hole penetrating the protective layer and the metal layer is formed in the laser processing method according to the first embodiment.

As shown in FIG. 11, if the application of the first laser beam B1 to the metal layer 101 is continued, the diameter-increased hole 203m penetrates the metal layer 101. Accordingly, the diameter-increased hole 203s of the protective layer 102 and the diameter-increased hole 203m of the metal layer 101 communicate with each other, and the fine hole 200 penetrating the protective layer 102 and the metal layer 101 of the workpiece 100A is formed.

In the present embodiment, the laser processing method includes Step S1 of irradiating the workpiece 100A, in which the metal layer 101 made of the heat-resistant alloy and the protective layer 102 made of the thermal barrier coating are laminated, with the first laser beam B1 that is the short-pulse laser beam, and forming the through-hole 201A penetrating at least the metal layer 101 of the workpiece 100A, and Step S2 of irradiating the workpiece 100A with the first laser beam B1 to expand the through-hole 201A. According to such a configuration, the short-pulse laser beam is used for the first laser beam B1. The short-pulse laser beam has a shorter pulse width than a fiber laser beam or the like and has a small influence of heat during the irradiation with the laser beam. By forming the through-hole 201A in the metal layer 101 with the first laser beam B1 that is such a short-pulse laser beam, the molten metal generated when the through-hole 201A is formed can be prevented from rebounding to the protective layer 102 side. Additionally, by forming the through-hole 201A, the molten metal generated when the first laser beam B1 is applied to expand the through-hole 201A is discharged to the side opposite to the protective layer 102 through the through-hole 201A. Accordingly, also in Step S2 of expanding the through-hole 201A, the molten metal can be prevented from rebounding to the protective layer 102 side. Hence, the laser processing method can suppress the separation between the protective layer and the metal layer.

Moreover, the laser processing method can enhance the quality of the fine hole (hole) 200 formed by the irradiation with the first laser beam B1 by suppressing adhesion of dross or the separation between the protective layer 102 and the metal layer 101 by the heat of the dross.

Additionally, in Step S1 of forming the through-hole 201A, the workpiece 100A is irradiated with the first laser beam B1, and the through-hole 201A penetrating the protective layer 102 and the metal layer 101 is formed. According to such a configuration, the through-hole 201A penetrating the protective layer 102 and the metal layer 101 can be efficiently formed by the first laser beam B1. Additionally, by processing the protective layer 102, which is easily affected by heat, with the first laser beam B1 that is the short-pulse laser beam, the influence of heat on the protective layer 102 can be suppressed, and the processing can be performed with excellent quality.

Additionally, Step S2 of expanding the through-hole 201A includes Step S3 of irradiating the protective layer 102 with the first laser beam B1 to expand the through-hole 201As in the protective layer 102, and Step S4 of irradiating the metal layer 101 with the first laser beam B1 to expand the through-hole 201Am in the metal layer 101. According to such a configuration, by expanding the through-hole 201As in the protective layer 102 with the first laser beam B1, the influence of heat on the protective layer 102 can be suppressed, and the processing can be performed with excellent quality. Additionally, also regarding the metal layer 101, by expanding the through-hole 201Am in the protective layer 102 with the first laser beam B1, the molten metal can be prevented from rebounding to the protective layer 102 side.

Additionally, Step S4 of expanding the through-hole 201Am in the metal layer 101 makes the output of the first laser beam B1 higher than that in Step S3 of expanding the through-hole 201As in the protective layer 102. According to such a configuration, in Step S3 of expanding the through-hole 201As in the protective layer 102, by making the output of the first laser beam B1 low, the influence of heat on the protective layer 102 can be suppressed, and the processing can be performed with excellent quality. In contrast, in Step S4 of expanding the through-hole 201Am in the metal layer 101, the processing can be efficiently performed in a short time by increasing the output of the first laser beam B1.

### (Modification example of first embodiment)

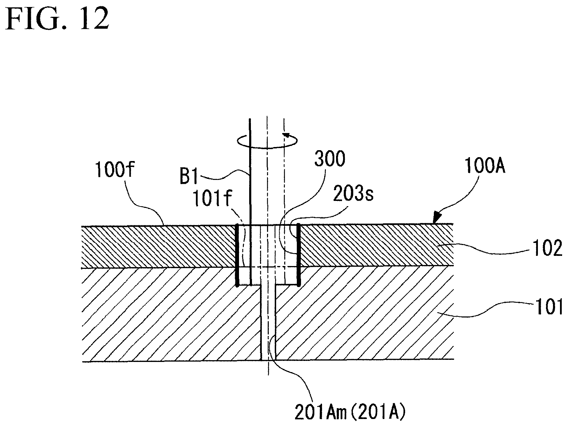

FIG. 12 is a sectional view showing a state where the first laser beam is applied while being turned in a state where a surface of the metal layer is exposed in a laser processing method according to a modification example of the first embodiment.

As shown in FIG. 12, as a modification example, in Step S2 of expanding the through-hole 201A of the above first embodiment, a metal film 300 may be formed on an inner peripheral surface of the diameter-increased hole 203s formed in the protective layer 102.

For example, in Step S4 of expanding the through-hole 201Am in the metal layer 101 of the above first embodiment, the metal film 300 may be formed the inner peripheral surface of the diameter-increased hole 203s formed in the protective layer 102.

For example, the metal film 300 may be formed across the boundary between the protective layer 102 and the metal layer 101.

In order to form the metal film 300, after Step S3 of expanding the through-hole 201As in the protective layer 102 is completed, a surface 101f is irradiated with the first laser beam B1 in a state which the surface 101f of the metal layer 101 in contact with the protective layer 102 is exposed into the diameter-increased hole 203s. The scanning in which the first laser beam B1 is applied to the surface 101f of the metal layer 101 while being turned around a central axis of the through-hole 201A is performed. Then, fine metal particles are scattered from the surface 101f of the metal layer 101 and adhere to an inner peripheral surface including the boundary between the diameter-increased hole 203s of the protective layer 102 and the metal layer 101. Accordingly, the metal film 300 formed by sputtering or the like is formed on the inner peripheral surface of the diameter-increased hole 203s of the protective layer 102.

In addition, in the present modification example, the first laser beam B1 is turned around the central axis of the through-hole 201A. However, the first laser beam B1 may be turned around the central axis of the through-hole 201A to form the metal film 300 only in an initial stage of Step S2 of expanding the through-hole 201A.

Additionally, in the present modification example, the metal film 300 is formed on the inner peripheral surface including the boundary between the diameter-increased hole 203s of the protective layer 102 and the metal layer 101 by irradiating the surface 101f with the first laser beam B1. However, any metal film 300 may be formed.

For example, the metal film 300 may be formed by irradiating the surface 101f with the first laser beam B1 such that the inner peripheral surface of the diameter-increased hole 203s of the protective layer 102 is thinly covered with the heat-resistant alloy.

In the modification example of the present embodiment, the first laser beam B1 is applied while being turned around the central axis of the through-hole 201A in a state which the surface 101f of the metal layer 101 in contact with the protective layer 102 is exposed. According to such a configuration, if the first laser beam B1 is applied while being turned in a state which the surface 101f of the metal layer 101 is exposed, the fine metal particles are scattered from the surface 101f of the metal layer 101 and adhere to the inner peripheral surface including the boundary between the diameter-increased hole 203s of the protective layer 102 and the metal layer 101, and the metal film 300 is formed by sputtering or the like. The inner peripheral surface of the diameter-increased hole 203s (opening) of the protective layer 102 can be protected by the metal film 300, and it can be suppressed that the separation between the metal layer 101 and the protective layer 102 occurs by the heat of the dross generated in Step S4 of expanding the through-hole 201Am in the metal layer 101, which is performed after that.

### <Second embodiment>

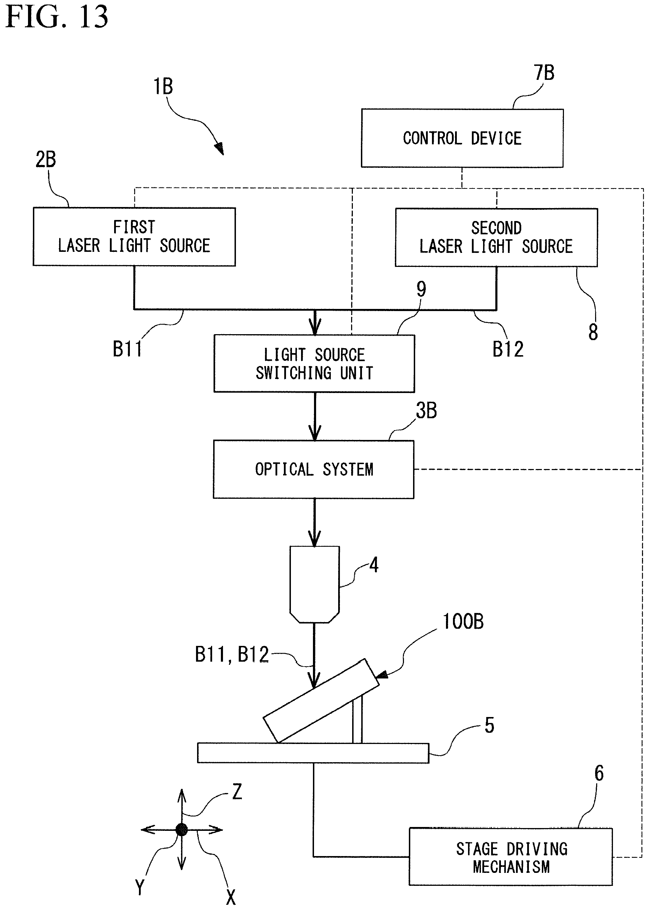

Next, a second embodiment of the present invention will be described with reference to FIGS. 13 to 18. In the second embodiment, the same constituent elements as those of the first embodiment will be designated by the same reference signs, and a detailed description thereof will be omitted.

FIG. 13 is a block diagram showing a functional configuration of a laser processing system for forming a hole in a workpiece by a laser processing method according to the second embodiment.

As shown in FIG. 13, a laser processing system 1B used in the laser processing method in the present embodiment includes a first laser light source 2B, a second laser light source 8, a light source switching unit 9, an optical system 3B, the nozzle 4, the stage 5, the stage driving mechanism 6, and a control device 7B.

The first laser light source 2B oscillates a first laser beam B11.

The first laser beam B11 is a short-pulse laser beam.

In the present embodiment, the first laser light source 2B oscillates the first laser beam B11 having a pulse width of 100 femtoseconds or more and 10 microseconds or less as the short-pulse laser beam.

The more preferable pulse width of the first laser beam B11 is 0.1 nanoseconds or more and 1 microsecond or less.

The even more preferable pulse width of the first laser beam B11 is 1 nanosecond or more and 1 microsecond or less.

Additionally, the pulse frequency of the first laser beam B11 oscillated by the first laser light source 2B is, for example, 10 kHz to 1000 kHz. As such a first laser light source 2B, for example, a fiber laser or a YAG laser can be used.

The second laser light source 8 oscillates a second laser beam B12 having a wider pulse width than the first laser beam B11. In the present embodiment, the second laser beam B12 oscillated by the second laser light source 8 has a pulse width of, for example, 10 microseconds or more and 100 milliseconds or less.

The more preferable pulse width of the second laser beam B12 is 0.05 milliseconds or more and 10 milliseconds or less.

The even more preferable pulse width of the second laser beam B12 is 0.1 millisecond or more and 1 millisecond or less.

Additionally, the pulse frequency of the second laser beam B12 oscillated by the second laser light source 8 is, for example, 100 Hz to 200 Hz. As such a second laser light source 8, for example, the fiber laser, the YAG laser, or the like can be used.

The light source switching unit 9 switches between the first laser beam B11 oscillated by the first laser light source 2B and the second laser beam B12 oscillated by the second laser light source 8. The light source switching unit 9 selects one of the first laser beam B11 oscillated by the first laser light source 2B and the second laser beam B12 oscillated by the second laser light source 8, and supplies the selected laser beam to the optical system 3B. The configuration of the light source switching unit 9 is not limited at all.

The optical system 3B guides the first laser beam B11 or the second laser beam B12, which is supplied from the light source switching unit 9, to the nozzle 4. The optical system 3B includes a condensing optical system (not shown) for condensing the first laser beam B11 or the second laser beam B12 at a predetermined irradiation position on a workpiece 100B, a scanning mechanism for performing scanning with the first laser beam B11 or the second laser beam B12, an irradiation angle changing mechanism (not shown) that changes the irradiation angle of the first laser beam B11 or the second laser beam B12, and the like. As such an optical system 3B, for example, an optical system using a prism, a Galvano scanner, or the like can be used. In addition, the specific configuration of the optical system 3B is not limited at all as long as the required functions can be performed.

The nozzle 4 irradiates the workpiece 100B on the stage 5 with the first laser beam B11 or the second laser beam B12 guided by the optical system 3B.

The control device 7B controls the oscillation of the first laser beam B11 or the second laser beam B12 in the first laser light source 2B or the second laser light source 8, a light source switching operation in the light source switching unit 9, the operation of the optical system 3B, the operation of the stage driving mechanism 6, and the like. The hardware configuration of the control device 7B is the same as that of the control device 7 in the first embodiment shown in FIG. 2. As shown in FIG. 3, the control device 7B includes respective components of a light source control unit 81B, the optical system control unit 82, the stage control unit 83, and the signal transmission/reception unit 84 by executing the program stored in advance in its own device.

The light source control unit 81B controls the oscillation of the first laser beam B11 in the first laser light source 2B, the oscillation of the second laser beam B12 in the second laser light source 8, and the light source switching operation in the light source switching unit 9.

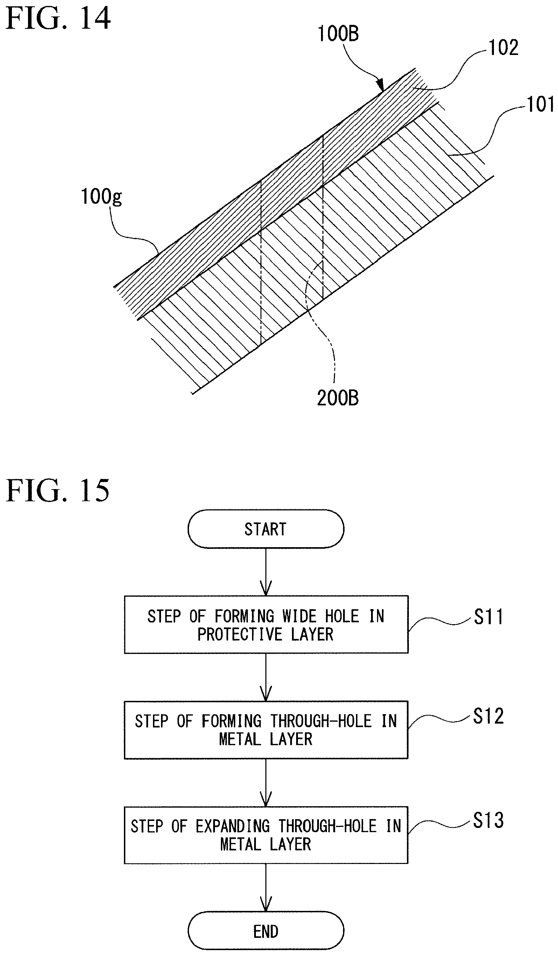

FIG. 14 is a sectional view showing an example of the workpiece in which the hole is formed by the laser processing method according to the second embodiment.

As shown in FIG. 14, the workpiece 100B laser-processed by the above laser processing system 1B is formed of the laminate in which the metal layer 101 and the protective layer 102 are laminated. The workpiece 100B is, for example, parts that are exposed to high temperature atmosphere, such as stator and rotor vanes of gas turbines, stator vanes of aircrafts engines, or panels that constitute combustors of aircraft engines. In the present embodiment, a fine hole 200B is formed in the workpiece 100B in a direction inclined with respect to a direction orthogonal to a workpiece surface 100g on the protective layer 102 side. In this way, by forming the fine hole 200B so as to be inclined with respect to the workpiece surface 100g of the workpiece 100B, the dimension of the workpiece 100B to be laser-processed is as large as, for example, several millimeters or more.

In the laser processing method of the present embodiment, a fine hole 200B having an internal diameter of, for example, about 0.5 mm to 3 mm is formed in the metal layer 101 and the protective layer 102 of such a workpiece 100B.

Next, the laser processing method related to the present embodiment will be described.

FIG. 15 is a flowchart showing a flow of the laser processing method according to the second embodiment. As shown in FIG. 15, the laser processing method according to the present embodiment includes Step S11 of forming a wide hole (opening) 211 in the protective layer 102, Step S12 of forming a through-hole 212 in the metal layer 101, and Step S13 of expanding the through-hole 212 in the metal layer 101. The operation of the laser processing system 1B in the following respective steps is performed as the CPU 71 of the above control device 7B executes the program to control the operation of respective units of the light source control unit 81B, the optical system control unit 82, the stage control unit 83, and the signal transmission/reception unit 84.

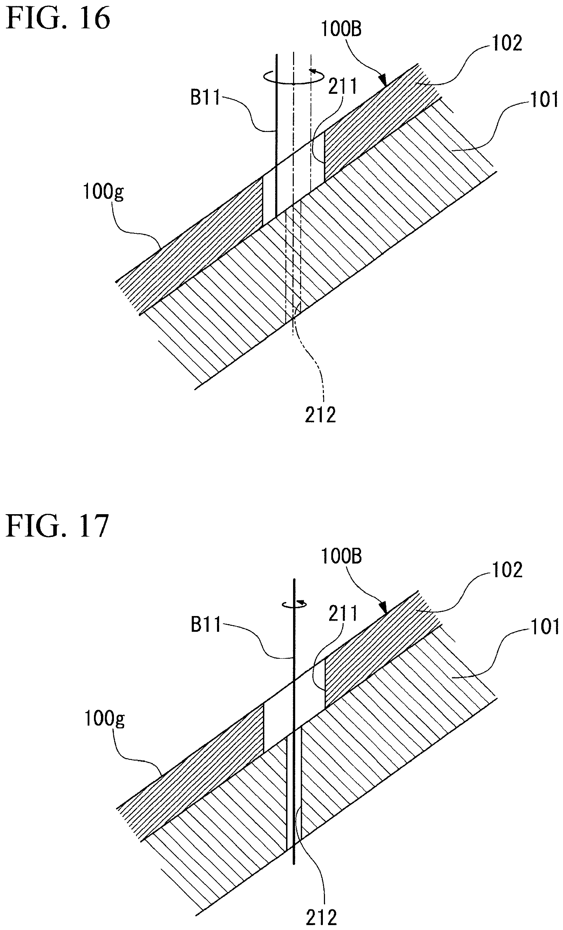

FIG. 16 is a sectional view showing a state where the wide hole is formed by irradiating the protective layer with the first laser beam in the laser processing method according to the second embodiment.

As shown in FIG. 16, in Step S11 of forming the wide hole 211 in the protective layer 102, the first laser beam B11 is applied to the protective layer 102 to form the wide hole 211. To perform this, in the laser processing system 1B shown in FIG. 13, the first laser light source 2B is selected by the light source switching unit 9. The workpiece 100B on the stage 5 is irradiated from the nozzle 4 with the first laser beam B11 oscillated by the first laser light source 2B and passing through the optical system 3B. The wide hole 211 has the same internal diameter as that of the fine hole 200B to be formed. The wide hole 211 has a larger internal diameter than the through-hole 212 formed in the metal layer 101 in Step S12. The workpiece 100B is scanned by the operation of the optical system 3B or the stage driving mechanism 6 such that the first laser beam B11 turns around an irradiation axis of the first laser beam B11. In this way, by forming the wide hole 211 in the protective layer 102 by the first laser beam B11 that is the short-pulse laser beam, the influence of heat on the protective layer 102 is suppressed.

If the wide hole 211, which has the same internal diameter as the fine hole 200B and penetrates the protective layer 102, is formed in the protective layer 102, the process proceeds to Step S12.

FIG. 17 is a sectional view showing a state where the through-hole penetrating the metal layer is formed by irradiating the metal layer with the first laser beam in the laser processing method according to the second embodiment.

As shown in FIG. 17, in Step S12 of forming the through-hole 212 in the metal layer 101, the first laser beam B11, which is the short-pulse laser beam, is applied to form the through-hole 212 in the metal layer 101 in the workpiece 100B. To perform this, the workpiece 100B on the stage 5 (refer to FIG. 13) is irradiated from the nozzle 4 with the first laser beam B11 oscillated by the first laser light source 2B and passing through the optical system 3B. In the present embodiment, the internal diameter of the through-hole 212 is, for example, about 0.2 mm.

By using the first laser beam B11 that is the short-pulse laser beam, when the through-hole 212 is formed in the metal layer 101, even if the through-hole 212 is in a non-penetration state, the molten metal generated as the metal layer 101 melts is prevented from rebounding to the protective layer 102 side. After the through-hole 212 is formed in the metal layer 101, the process proceeds to Step S13 of expanding the through-hole 212 in the metal layer 101.

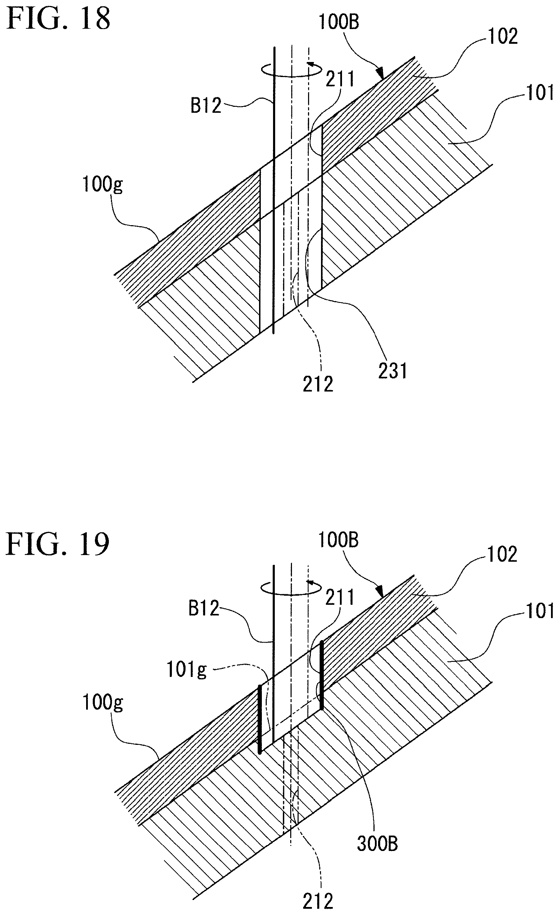

FIG. 18 is a sectional view showing a state where the fine hole penetrating the protective layer and the metal layer is formed in the laser processing method according to the second embodiment.

As shown in FIG. 18, in Step S13 of expanding the through-hole 212 in the metal layer 101, the second laser beam (laser beam) B12 is applied to the workpiece 100B to increase the internal diameter of the through-hole 212 formed in the metal layer 101. To perform this, in the laser processing system 1B shown in FIG. 13, the second laser light source 8 is selected by the light source switching unit 9. The workpiece 100B on the stage 5 is irradiated from the nozzle 4 with the second laser beam B12 oscillated by the second laser light source 8 and passing through the optical system 3B. In Step S13, the workpiece 100B is scanned by the operation of the optical system 3B or the stage driving mechanism 6 such that the second laser beam B12 turns around a central axis of the through-hole 212.

If the diameter of a diameter-increased hole 231 is increased to the internal diameter of the fine hole 200B to be formed, a fine hole 200B as which the wide hole 211 and the through-hole 212 increased the internal diameter communicate with each other is formed to penetrate the workpiece 100B.

Here, the molten metal generated when the internal diameter of the through-hole 212 is increased is discharged to a lower side that is a side opposite to the protective layer 102 through the through-hole 212. Additionally, in Step S13, the second laser beam B12 having a longer pulse width than the first laser beam B11 that is the short-pulse laser beam is used. Hence, the processing of expanding the internal diameter of the through-hole 212 can be performed in a shorter time than in a case where the first laser beam B11 is used.

In addition, in Step S13 of expanding the through-hole 212, the first laser beam B11 oscillated by the first laser light source 2B may be used instead of the second laser beam B12.

In the present embodiment, the laser processing method includes Step S12 of irradiating the workpiece 100B, in which the metal layer 101 made of the heat-resistant alloy and the protective layer 102 made of the thermal barrier coating are laminated, with the first laser beam B11 that is the short-pulse laser beam to form the through-hole 212 penetrating the metal layer 101 of the workpiece 100B, and Step S13 of irradiating the workpiece 100B with the second laser beam B12 to expand the through-hole 212. According to such a configuration, by forming the through-hole 212 in the metal layer 101 with the first laser beam B11 that is the short-pulse laser beam, the molten metal generated when the through-hole 212 is formed can be prevented from rebounding to the protective layer 102 side. Additionally, by forming the through-hole 212, the molten metal generated when the second laser beam B12 is applied to expand the through-hole 212 is discharged to the side opposite to the protective layer 102 through the through-hole 212. Accordingly, also in Step S13 of expanding the through-hole 212, the molten metal can be prevented from rebounding to the protective layer 102 side.

Hence, the laser processing method can suppress the separation between the protective layer and the metal layer.

Moreover, the laser processing method can enhance the quality of the fine hole (hole) 200B formed by the irradiation with the first laser beam B11 or the second laser beam B12 by suppressing adhesion of dross or the separation between the protective layer 102 and the metal layer 101 by the heat of the dross.

Additionally, before Step S12 of forming the through-hole 212, Step S11 of irradiating the protective layer 102 with the first laser beam B11 to form the wide hole 211 having a larger internal diameter than the through-hole 212 in the protective layer 102 is further included. Additionally, in Step S12 of forming the through-hole 212, the inside of the wide hole 211 is irradiated with the first laser beam B11, and the through-hole 212 penetrating the metal layer 101 is formed. According to such a configuration, by forming the wide hole 211 and the through-hole 212 with the first laser beam B11 that is the short-pulse laser beam, the influence of heat on the protective layer 102 can be suppressed, and the processing can be performed with excellent quality. Additionally, the processing to the protective layer 102 can be performed only once. Thus, in a case where processing conditions are changed in the protective layer 102 and the metal layer 101, condition changes are also performed only once, and the efficiency is enhanced.

Additionally, in Step S13 of expanding the through-hole 212, the inside of the wide hole 211 is irradiated with the second laser beam B12 having a wider pulse width than the first laser beam B11 during laser output to expand the through-hole 212 in the metal layer 101. According to such a configuration, by expanding the through-hole 212 in the metal layer 101 with the second laser beam B12 after the wide hole 211 is formed in the protective layer 102, the processing of expanding the through-hole 212 can be completed in a short time.

### (Modification example of second embodiment)

FIG. 19 is a sectional view showing a state where the first laser beam is applied while being turned in a state where the surface of the metal layer is exposed in a laser processing method according to a modification example of the second embodiment.

As shown in FIG. 19, in Step S12 of forming the through-hole 212 in the metal layer 101 of the above second embodiment, a metal film 300B may be formed on an inner peripheral surface of the wide hole 211 formed in the protective layer 102.

For example, the metal film 300B may be formed across the boundary between the protective layer 102 and the metal layer 101.

In order to form the metal film 300B, after Step S11 of forming the wide hole 211 in the protective layer 102 is completed, the scanning of irradiating a surface 101g with the first laser beam B11 is performed in a state which the surface 101g of the metal layer 101 in contact with the protective layer 102 is exposed into the wide hole 211. The first laser beam B11 is applied to the surface 101g of the metal layer 101 while being turned around the central axis of the through-hole 212. Then, fine metal particles are scattered from the surface 101g of the metal layer 101 and adhere to the inner peripheral surface of the wide hole 211 of the protective layer 102. Accordingly, the metal film 300B formed by sputtering or the like is formed on the inner peripheral surface including the boundary between the wide hole 211 of the protective layer 102 and the metal layer 101.

In the modification example of the present embodiment, the first laser beam B11 is applied while being turned around the central axis of the through-hole 212 in a state which the surface 101g of the metal layer 101 in contact with the protective layer 102 is exposed. According to such a configuration, if the first laser beam B11 is applied while being turned in a state which the surface 101g of the metal layer 101 is exposed, the fine metal particles are scattered from the surface 101g of the metal layer 101 and adhere to the inner peripheral surface including the boundary between the wide hole 211 of the protective layer 102 and the metal layer 101, and the metal film 300B is formed by sputtering or the like. The inner peripheral surface of the wide hole 211 of the protective layer 102 can be protected by the metal film 300B, and it can be suppressed that the separation between the metal layer 101 and the protective layer 102 occurs by the heat of the dross generated in Step S13 of expanding the through-hole 212 in the metal layer 101, which is performed after that.

In addition, in the present modification example, the first laser beam B11 is turned around the central axis of the through-hole 212. However, the first laser beam B11 may be turned around the central axis of the through-hole 212 to form the metal film 300B only in an initial stage of Step S12 of forming the through-hole 212.

Additionally, in the present modification example, the metal film 300B is formed on the inner peripheral surface including the boundary between the wide hole 211 of the protective layer 102 and the metal layer 101 by irradiating the surface 101g with the first laser beam B11. However, any metal film 300B may be formed.

For example, the metal film 300B may be formed by irradiating the surface 101g with the first laser beam B11 such that the inner peripheral surface of the wide hole 211 of the protective layer 102 is thinly covered with the heat-resistant alloy.

While several preferred embodiments of the present invention have been described and shown above, it should be understood that these are exemplary of the invention and are not to be considered as limiting the scope of the invention. The embodiments can be implemented in various forms, and omissions, substitutions, and other modifications can be made without departing from the spirit or scope of the present invention. The embodiments and modifications fall within the scope of the invention described in the appended claims and their equivalents as well as the scope and the gist of the invention.

### INDUSTRIAL APPLICABILITY

According to the above-described laser processing method, the separation between the protective layer and the metal layer can be suppressed.

### EXPLANATION OF REFERENCES

1A: laser processing system
1B: laser processing system
2: laser light source
2B: first laser light source
3: optical system
3B: optical system
4: nozzle
5: stage
6: stage driving mechanism
7: control device
7B: control device
8: second laser light source
9: light source switching unit
71: CPU
72: ROM
73: RAM
74: HDD
75: signal transmission/reception module
81: light source control unit
81B: light source control unit
82: optical system control unit
83: stage control unit
84: signal transmission/reception unit
100A: workpiece
100B: workpiece
100f: workpiece surface
100g: workpiece surface
101: metal layer
101f: surface
101g: surface
102: protective layer
200: fine hole (hole)
200B: fine hole (hole)
201A: through-hole
201Am: through-hole
201As: through-hole
202m: processing hole
202s: processing hole
203m: diameter-increased hole
203s: diameter-increased hole (opening)
211: wide hole (opening)
212: through-hole
231: diameter-increased hole
300: metal film
300B: metal film
B1: first laser beam (laser beam)
B11: first laser beam
B12: second laser beam (laser beam)

## Claims

1. A laser processing method comprising:
a step of irradiating a workpiece, in which a metal layer made of a heat-resistant alloy and a protective layer made of a thermal barrier coating are laminated, with a first laser beam that is a short-pulse laser beam, and forming a through-hole penetrating the metal layer; and
a step of irradiating the workpiece with a laser beam to expand the through-hole.

2. The laser processing method according to claim 1,
wherein, in the step of forming the through-hole, the workpiece is irradiated with the first laser beam to form the through-hole penetrating the protective layer and the metal layer.

3. The laser processing method according to claim 1 or 2,
wherein the step of expanding the through-hole includes
a step of irradiating the protective layer with the first laser beam as the laser beam to expand the through-hole in the protective layer, and
a step of irradiating the metal layer with the first laser beam as the laser beam to expand the through-hole in the metal layer.

4. The laser processing method according to claim 3,
wherein the step of expanding the through-hole in the metal layer makes an output of the first laser beam higher than that in the step of expanding the through-hole in the protective layer.

5. The laser processing method according to claim 1, further comprising:
a step of irradiating the protective layer with the first laser beam to form a wide hole having a larger internal diameter than the through-hole in the protective layer before the step of forming the through-hole,
wherein, in the step of forming the through-hole, an inside of the wide hole is irradiated with the first laser beam to form the through-hole penetrating the metal layer.

6. The laser processing method according to claim 5,
wherein, in the step of expanding the through-hole, the inside of the wide hole is irradiated with the first laser beam, or a second laser beam having a wider pulse width than the first laser beam during a laser output as the laser beam to expand the through-hole in the metal layer.

7. The laser processing method according to any one of claims 1 to 6,
wherein a pulse width of the first laser beam during the laser output is 100 femtoseconds or more and 10 microseconds or less.

8. The laser processing method according to any one of claims 1 to 7,
wherein the first laser beam is applied while being turned around a central axis of the through-hole in a state where a surface of the metal layer in contact with the protective layer is exposed.
